# FASCICULE DE BREVET EUROPEEN

(11) **EP 2 827 718 B1**
(45) Date de publication et mention de la délivrance du brevet: **01.03.2017**
(21) Numéro de dépôt: 13713393.0
(22) Date de dépôt: 20.03.2013
(51) Int. Cl.: A22C 11/10, A22C 11/00

(54) **PROCEDE ET DISPOSITIF DE MISE EN PORTIONS AVEC PINCES PARTICULIERES**
PORTIONIERUNGSVERFAHREN UND -VORRICHTUNG MIT SPEZIELLEN KLAMMERN
PORTIONING METHOD AND DEVICE COMPRISING PARTICULAR CLAMPS

(30) Priorité: 20.03.2012 FR 1252504
(43) Date de publication de la demande: 28.01.2015
(73) Titulaire: Marel France, 56150 Baud (FR)
(72) Inventeur: LE PAIH, Jacques, F-56930 Plumeliau (FR); VAN DEN NIEUWELAAR, Adrianus, NL-5421 XG Gemert (NL); MEGGELAARS, Sigebertus, NL-5643 PM Eindhoven (NL); LE PABIC, Fabrice, F-56330 Camors (FR)
(74) Mandataire: Novagraaf Technologies
(86) Numéro de dépôt international: PCT/EP2013/055815
(87) Numéro de publication internationale: WO 2013/139854

(56) Documents cités:
- WO-A2-2008/155491
- DE-A1-102004 022 716
- US-A1- 2008 307 758
- US-B2- 7 762 874

## Description

La présente invention concerne un procédé et un dispositif de mise en portions d'un boudin continu pour la réalisation de portions individuelles, et plus particulièrement un dispositif de mise en portions comprenant au moins une paire de pinces particulières, notamment pour la réalisation de saucisses à partir d'un boudin continu constitué d'un produit alimentaire tel qu'un hachis de viande ou poisson et/ou légumes, recouvert d'une peau ou enveloppe.

Il est connu, notamment par les documents brevets WO2008/155491 et WO2010/006893, et US 7 762 874, des dispositifs de mise en portions pour la fabrication de produits de type saucisses qui comprennent une paire de pinces opposées aptes à être déplacées l'une vers l'autre par des moyens d'actionnement d'une position ouverte vers une position fermée afin de pincer le boudin. Chaque pince de la paire comprend des moyens de pincement formés de plusieurs plaques de pincement chacune munie en extrémité d'un bord avant de pincement. Les deux pinces sont décalées l'une par rapport à l'autre de sorte que, lors de leur déplacement vers la position fermée, les plaques sont déplacées simultanément et se chevauchent à la manière d'une cisaille, et forment par leurs bords de pincement des passages ou diaphragmes dont les sections diminuent progressivement. Les diaphragmes ont une section minimale non nulle dans la position fermée des pinces. Le dispositif de mise en portions comprend des moyens de coupe comportant une lame associée à la paire de pinces, apte à être actionnée pour couper le boudin lorsque les pinces sont en position fermée.

Ces systèmes de pinces assurent un pincement progressif autour du boudin qui limite les risques de déchirement de son enveloppe, notamment dans le cas de la fabrication de saucisses à partir d'un boudin continu obtenu par coextrusion d'un produit alimentaire enduit d'une base de départ, comportant par exemple un ou plusieurs hydrocolloïdes, laquelle base est destinée à former l'enveloppe par gélification dans un bain disposé en aval du dispositif de coextrusion et en amont du dispositif de mise en portions.

Après réalisation de la coupe et déplacement des pinces vers leur position ouverte, le produit alimentaire a tendance à sortir de l'enveloppe par les extrémités ouvertes de la saucisse. Les ouvertures en extrémité de la saucisse peuvent atteindre 4 à 8 mm.

Le but de la présente invention est de proposer un dispositif de mise en portions palliant les inconvénients précités, qui permet de limiter, voire supprimer l'ouverture des extrémités des portions après l'opération de coupe, en particulier dans le cas de saucisses ayant une enveloppe coextrudée.

A cet effet, la présente invention a pour objet un dispositif de mise en portions d'un boudin continu pour la réalisation de portions, en particulier de saucisses, comme défini dans la revendication 1, comprenant au moins une paire de pinces opposées aptes à être déplacées l'une vers l'autre par des moyens d'actionnement d'une position ouverte vers une position fermée pour pincer le boudin afin de former des portions, chaque pince de la paire comprenant des moyens de pincement aptes à être manoeuvrés par lesdits moyens d'actionnement pour pincer le boudin sur un tronçon central de boudin, puis pour pincer le boudin sur des tronçons latéraux de boudin disposés de part et d'autre du tronçon central.

Dans le cas de la fabrication de saucisses obtenues à partir d'un boudin formé d'un produit alimentaire enveloppé dans une enveloppe, les pinces du dispositif de mise en portions selon l'invention permettent de chasser progressivement le produit alimentaire de l'enveloppe sur un premier tronçon central de l'enveloppe du boudin, puis sur des seconds tronçons latéraux de part et d'autre du tronçon central. Cette action des pinces sur le boudin en deux temps permet de vider l'enveloppe sur une longueur importante correspondant aux longueurs cumulées du tronçon central et des tronçons latéraux, ce qui limite l'ouverture des extrémités des portions après réalisation ultérieure de la coupe au niveau du tronçon central vidé de l'enveloppe.

Chaque pince de la paire comprend des moyens de pincement centraux et des moyens de pincement latéraux disposés de chaque côté des moyens de pincement centraux, lesdits moyens d'actionnement étant aptes à manoeuvrer les moyens de pincement centraux des pinces transversalement au boudin, vers une position fermée intermédiaire des pinces pour pincer le boudin via lesdits moyens de pincement centraux sur le tronçon central de boudin, puis à manoeuvrer les moyens de pincement latéraux transversalement au boudin, vers la position fermée des pinces pour pincer le boudin via les moyens de pincement latéraux de part et d'autre des moyens de pincement centraux, sur les tronçons latéraux de boudin.

Selon un autre mode de réalisation, chaque pince de la paire comprend des moyens de pincement aptes à être manoeuvrés par lesdits moyens d'actionnement transversalement au boudin pour pincer le boudin sur un tronçon central de boudin, puis à être manoeuvrés parallèlement au boudin pour pincer le boudin sur les tronçons latéraux.

Selon une particularité, chaque pince comprend en outre des moyens de maintien, disposés de part et d'autre des moyens de pincement, aptes à être déplacés par lesdits moyens d'actionnement pour venir contre le boudin sur des tronçons extérieurs dudit boudin disposés de part et d'autres des tronçons latéraux, dans la position fermée des pinces, pour maintenir ledit boudin.

L'enveloppe étant vidée sur une longueur importante, ces moyens de maintien, appelés également moyens de centrage ou moyens anti-éclatement, qui viennent contre le boudin, permettent de guider vers le centre des saucisses la quantité importante de produit alimentaire qui est chassée des tronçons vidés d'enveloppe, et donc d'éviter un accroissement trop important du diamètre du boudin de part et d'autre des tronçons vidés, qui pourrait entraîner un éclatement de l'enveloppe. Ces moyens permettent en outre de centrer le boudin lors de la mise en portions du boudin.

Grace à ces moyens de maintien, la pression interne dans l'enveloppe résultant du pincement est déplacée vers le centre des saucisses, ce qui limite, voire supprime l'ouverture des saucisses après réalisation des coupes et manoeuvre des pinces vers leur position ouverte. En outre, la pression interne de produit alimentaire est mieux répartie le long de la saucisse, ce qui limite, voire supprime le phénomène de cintrage des saucisses qui apparait classiquement avec les dispositifs de l'art antérieur, et donc d'obtenir des saucisses droites, faciles à conditionner en barquette.

Ce mode de réalisation assure une bonne fermeture des extrémités des portions. Après le retrait des pinces, le produit chassé par les pinces revient partiellement dans les tronçons vidés de longueur importante. La saucisse résultante présente en extrémité des petites queues d'enveloppe vidée, et s'apparente aux produits obtenus classiquement à partir d'un boudin torsadé puis coupé.

Selon un mode de réalisation, les moyens de maintien comprennent au moins un patin de maintien disposé de part et d'autre des moyens de pincement, et muni d'une surface de maintien qui est décalée transversalement vers l'extérieur par rapport aux moyens de pincement dans la position ouverte des pinces et dans la position fermée des pinces.

Selon un mode de réalisation, pour chaque pince de la paire,
- les moyens de pincement centraux comprennent au moins une plaque de pincement centrale munie en extrémité d'un bord de pincement, par exemple sensiblement en forme de V,
- et les moyens de pincement latéraux comprennent au moins une plaque de pincement latérale disposée de chaque côté de la plaque de pincement centrale, et munie en extrémité d'un bord de pincement, par exemple sensiblement en forme de V,
   les deux pinces étant décalées l'une par rapport à l'autre de sorte que, lors de leur déplacement vers la position fermée, les plaques de pincement centrale et latérales des pinces se chevauchent en cisaille, et forment par leurs bords de pincement respectivement un passage ou diaphragme central et deux passages ou diaphragmes latéraux dont les sections diminuent progressivement, ledit passage central ayant une section minimale non nulle dans la position fermée des pinces,
   pour chaque pince, les bords de pincement des plaques latérales sont décalés transversalement vers l'extérieur par rapport au bord de pincement de la plaque de pincement centrale dans la position ouverte des pinces, lesdits moyens d'actionnement étant aptes
- à manoeuvrer la plaque de pincement centrale et les plaques de pincement latérales pour diminuer progressivement et simultanément les sections des passages latéraux et du passage central, de la position ouverte des pinces jusqu'à une position fermée intermédiaire dans laquelle le passage central présente une section minimale non nulle et les passages latéraux présentent des sections supérieures à la section minimale du passage central,
- puis à manoeuvrer les plaques de pincement latérales pour diminuer progressivement les sections des passages latéraux, de la position fermée intermédiaire jusqu'à la position fermée dans laquelle les passages latéraux présentent des sections minimales non nulles identiques, ou sensiblement identiques, à la section minimale du passage central.

Les décalages transversaux entre les bords de pincement des plaques latérales et le bord de pincement de la plaque centrale sont de préférence identiques dans la position ouverte et dans la position fermée intermédiaire des pinces.

Selon une particularité, chaque patin comprend au moins une plaque de maintien disposée du côté extérieur de chaque plaque de pincement latéral, et munie en extrémité d'un bord de maintien dont une portion de fond forme ladite surface de maintien, les bords de maintien étant décalés transversalement vers l'extérieur par rapport aux bords de pincement des plaques latérales dans la position ouverte des pinces, les plaques de maintien se chevauchent en cisaille, et forment par leur bord de maintien respectivement un passage extérieur dont la section diminue progressivement lors du déplacement des pinces vers la position fermée, lesdits moyens d'actionnement étant aptes à manoeuvrer les plaques de maintien pour diminuer progressivement et simultanément les passages extérieurs, de la position ouverte jusqu'à la position fermée intermédiaire, dans laquelle les passages extérieurs présentent des sections supérieures aux sections des passages latéraux, puis de la position fermée intermédiaire jusqu'à la position fermée dans laquelle les passages extérieurs présentent des sections supérieures aux sections minimales des passages latéraux, et de préférence égales ou inférieures ou à la section du boudin à mettre en portions.

Selon ce mode de réalisation, les pinces présentent en outre des plaques de maintien dont les sections des passages extérieurs en position fermée des pinces sont supérieures aux sections minimales des passages principaux et secondaires, par exemple sensiblement égales ou inférieures à la section du boudin à portionner.

Les moyens de maintien, formés ici de plaques de maintien, sont éloignés de la zone de coupe de l'enveloppe, et ne réalisent pas une opération de formage des extrémités des portions. Lorsque les plaques de maintien forment des passages dont les sections en position fermée sont inférieures à la section du boudin à portionner, les zones des portions en contact avec les plaques de maintien en position fermée reprennent globalement leur section d'origine après l'opération de coupe et le déplacement des pinces en position ouverte.

A titre d'exemple, pour un boudin à portionner d'environ 22 mm de diamètre, l'enveloppe est vidée sur environ 25 mm via les plaques centrales et les plaques latérales, et est maintenue de part et d'autre de la portion vidée sur environ 12,5 via les plaques de maintien, et est par exemple réduit à un diamètre d'environ 18mm via lesdites plaques de maintien.

Selon un mode de réalisation, le bord de maintien de chaque plaque de maintien d'un patin comprend une portion de fond, formant la surface de maintien, se prolongeant par une portion supérieure et une portion inférieure,
- chaque pince comprend un patin dont chaque plaque de maintien comprend une portion supérieure crantée et une portion inférieure continue, et un patin dont chaque plaque de maintien comprend une portion inférieure crantée et une portion supérieure continue,
- et pour deux patins en vis-à-vis, chaque plaque de maintien du patin d'une pince a une portion supérieure crantée et une portion inférieure continue, et chaque plaque de maintien du patin de l'autre pince a une portion supérieure continue et une portion inférieure crantée, les crans desdites portions crantées empêchent le boudin de glisser le long desdites portions crantées lors du déplacement des pinces de la position intermédiaire fermée vers la position fermée, de manière à torsader la portion centrale.

Selon un mode de réalisation, chaque pince comprend au moins deux plaques de pincement centrales, dont les bords de pincement sont alignés, et/ou au moins deux plaques de pincement latérales de chaque côte des plaques de pincement centrales.

L'utilisation de plusieurs plaques de pincement permet d'utiliser des plaques de largeur restreinte assurant un pincement efficace du boudin sans l'endommager, tout en obtenant une longueur d'enveloppe vidée importante.

De préférence, les pinces sont formées avec des plaques de largeurs identiques. De préférence, la longueur d'enveloppe vidée par les plaques de pincement centrales est égale à la longueur d'enveloppe vidée par les plaques de pincement latérales. Chaque pince comprend ainsi un nombre de plaques latérales qui est égal au nombre de plaques centrales, les plaques latérales étant réparties en nombre égal de part et d'autre des plaques centrales.

De préférence, les pinces d'une paire comprennent un nombre identiques de plaques.

Selon un mode de réalisation, chaque pince comprend au moins quatre plaques de pincement centrales, et au moins deux plaques de pincement latérales de chaque côte des plaques de pincement centrales.

Selon un mode de réalisation, chaque pince comprend au moins deux plaques de maintien de part et d'autres des plaques de pincement centrale et latérales.

De préférence, la longueur d'enveloppe maintenue par les plaques de maintien est égale à la longueur totale d'enveloppe vidée par les plaques centrales et latérales. Chaque pince comprend ainsi un nombre de plaque de maintien égal au nombre de plaques centrales et de plaques latérales, les plaques de maintien étant réparties de manière égale de part et d'autre des plaques de pincement.

Selon un mode de réalisation, chaque pince comprend au moins quatre plaques de maintien de part et d'autre des plaques de pincement centrale et latérales. De préférence, lesdites pinces sont disposées de sorte que leurs plaques de pincement et leurs plaques de maintien soient positionnées en alternance dans la position fermée des pinces, deux plaques adjacentes n'appartenant pas à la même pince.

Selon un mode de réalisation, les plaques de pincement centrales et les plaques de pincement latérales de chaque pince sont montées sur un support de montage, lesdits moyens d'actionnement étant aptes à déplacer les supports de montage selon au moins un mouvement de va-et-vient perpendiculaire à la direction de transport du boudin, les plaques de pincement centrales étant montées coulissantes sur leur support de montage, perpendiculairement à la direction d'avancement du boudin et étant sollicitées par des premiers moyens élastiques vers une position de repos, lesdites plaques centrales d'une pince étant aptes à venir en butée contre des bords d'appui de plaques intermédiaires de l'autre pince dans la position fermée intermédiaire des pinces et à se déplacer par rapport à leur support de montage vers une position escamotée intermédiaire lorsque les pinces sont déplacées de la position fermée intermédiaire vers la position fermée.

Selon un mode de réalisation, le dispositif comporte des moyens de coupe comprenant au moins une lame associée à la paire de pinces apte à être manoeuvrée par des moyens d'actionnement entre deux plaques de pincement centrales adjacentes pour couper le boudin.

Selon un mode de réalisation, la lame est montée pivotante sur le support de montage d'une première pince, lesdits moyens d'actionnement étant aptes à faire pivoter ladite lame entre une position rétractée et une position active de coupe, la lame est sollicitée par des moyens de rappel élastiques vers sa position rétractée, les moyens d'actionnement de la lame étant montés sur la deuxième pince de la paire et comprennent de préférence un doigt monté sur le support de montage de la deuxième pince, apte à venir contre la lame pour la manoeuvrer la lame vers sa position active à l'encontre des moyens de rappel élastiques.

Selon un mode de réalisation, les plaques de pincement latérales sont montées coulissantes sur leur support de montage et sont sollicitées par des seconds moyens élastiques dans une position de repos, lesdites plaques de pincement latérales d'une pince étant aptes à venir en butée contre des bords d'appui de plaques intermédiaires de l'autre pince dans la position fermée des pinces, les plaques de pincement centrales et les plaques de pincement latérales, en butée contre les bords d'appui, étant aptes à se déplacer par rapport à leur support de montage vers une position escamotée, à l'encontre de leur moyens de rappels élastiques, lorsque lesdites pinces sont déplacées de la position fermée vers une position dite de coupe par rapprochement de leur support de montage, le doigt déplaçant la lame de sa position rétractée vers sa position active lors de ce déplacement de la position fermée vers la positon de coupe.

Ce montage coulissant des plaques avec une course supplémentaire des supports de montage lorsque les pinces sont dans leur position fermée permet de couper le boudin uniquement une fois que les passages latéraux et les passages centraux ont atteint leur section minimale.

Selon un mode de réalisation, lesdits moyens d'actionnement de pinces sont aptes à rapprocher et écarter les pinces selon un mouvement de va-et-vient à la fois dans la direction orthogonale et la direction parallèle à la direction de transport du boudin, la vitesse de déplacement des pinces étant sensiblement égale à la vitesse de transport du boudin lorsque les pinces sont en contact avec le boudin pour les opérations de pincement et de coupe, et éventuellement variable en dehors des opérations de pincement et de coupe.

Selon un mode de réalisation, les pinces de chaque paire sont montées rotatives sur deux disques tournants autour d'axe sensiblement parallèles aux axes de rotation des disques tournants, et perpendiculaires à la direction de transport du boudin, les disques étant entraînés en rotation par au moins un moteur.

La présente invention a également pour objet un procédé de mise en portions d'un boudin continu formé d'un produit alimentaire recouvert d'une enveloppe, comme défini dans la revendication 15, comprenant une étape de pincement dans laquelle le boudin est pincé pour chasser le produit alimentaire et vider l'enveloppe sur un tronçon d'enveloppe, caractérisé en ce que ladite étape de pincement comprend
- le pincement de l'enveloppe pour vider l'enveloppe sur un premier tronçon central d'enveloppe,
- puis le pincement de l'enveloppe de part et d'autre dudit tronçon central pour vider l'enveloppe sur deux tronçons latéraux d'enveloppe, disposés de part et d'autre du tronçon central.

Le pincement de l'enveloppe pour vider l'enveloppe sur un premier tronçon central d'enveloppe est un pincement transversal progressif audit boudin.

Le pincement de l'enveloppe pour vider l'enveloppe sur deux tronçons latéraux d'enveloppe est un pincement transversal progressif du boudin, ou un pincement longitudinal progressif du boudin dans les deux directions longitudinales opposées au tronçon central.

Selon un mode de réalisation, le procédé comprend lors de l'étape de pincement, le maintien du boudin sur des tronçons extérieurs d'enveloppe qui sont adjacents auxdits tronçons latéraux pour guider le déplacement du produit alimentaire lorsque le produit alimentaire est chassé du tronçon central et des tronçons latéraux et pour conserver une section transversale donnée au boudin sur lesdits tronçons latéraux, par exemple, sensiblement égale à la section transversale du boudin avant pincement.

Selon un mode de réalisation, lors du pincement pour vider l'enveloppe sur les deux tronçons latéraux, le boudin entraîné en rotation dans des sens opposés en amont et en aval de la portion centrale vidée afin de torsader ladite portion centrale vidée.

Selon un mode de réalisation, le pincement de l'enveloppe sur les deux tronçons latéraux commence avant que ledit tronçon central soit vidé.

Selon un mode de réalisation, le procédé comporte une étape de coupe comprenant la coupe de l'enveloppe au niveau du tronçon central après le pincement de l'enveloppe sur les tronçons latéraux, le pincement du tronçon central et des tronçons latéraux étant relâchés après réalisation de la coupe.

L'invention sera mieux comprise, et d'autres buts, détails, caractéristiques et avantages apparaîtront plus clairement au cours de la description explicative détaillée qui va suivre de deux modes de réalisation particuliers actuellement préférés de l'invention, en référence aux dessins schématiques annexés sur lesquels :
- la figure 1 est une vue schématique en perspective d'un dispositif de mise en portions équipé d'une paire de pinces de l'art antérieur ;
- la figure 2 est une vue schématique agrandie en perspective d'une paire de pinces selon un premier mode de réalisation de l'invention, les pinces étant dans une position ouverte ;
- la figure 3 est une vue schématique en perspective éclatée des différents éléments constitutifs de la paire de pince de la figure 2 ;
- la figure 4 est une vue en perspectives de la paire de pince de la figures 2 dans quatre positions différentes des pinces : position ouverte, position fermée intermédiaire, position fermée, position de coupe, et position ouverte ;
- les figures 5A à 5D sont des vues en coupe horizontale, selon le plan de coupe V-V de la figure 4, de la paire de pinces dans les différentes positions précitées ;
- la figure 6A illustre une vue en perspective d'une paire de pinces selon un deuxième mode de réalisation de l'invention, les pinces étant dans une position ouverte ;
- les figures 6B et 6C sont des vues en perspective analogues à celles de la figure 6A, les pinces étant respectivement dans une position fermée intermédiaire et dans une position fermée ;
- les figures 7A, 7B et 7C sont des vues schématiques en coupe longitudinale respectivement de la paire de pinces des figures 6A, 6B et 6C;et
- la figure 8 est une vue schématique illustrant l'opération de coupe du boudin des figures 6C et 7B.

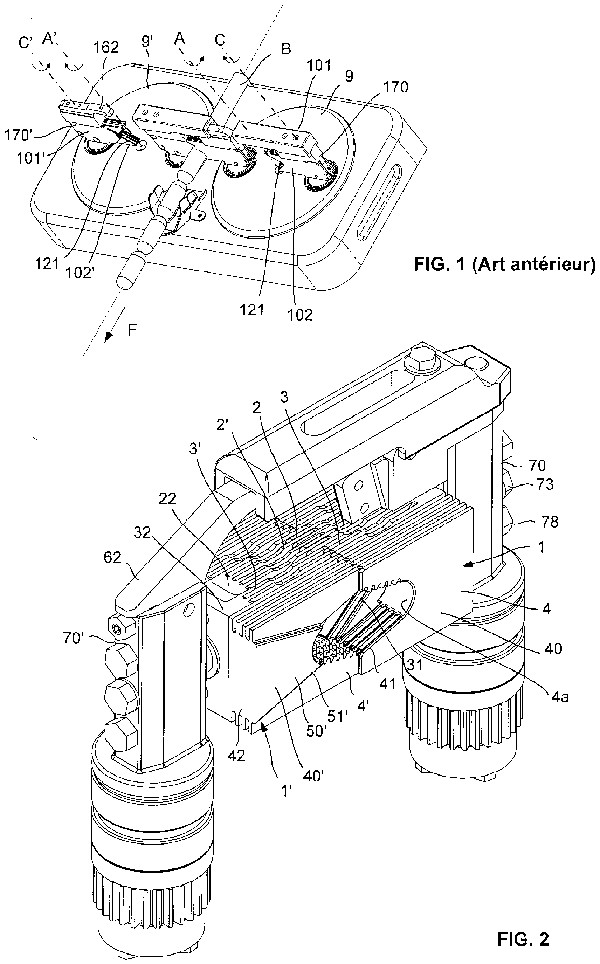

La figure 1 illustre un dispositif de mise en portion selon l'art antérieur, tel que décrit notamment dans les documents brevet précités WO2008/155491 et WO2010/006893, dans lequel les pinces sont montées rotatives sur des disques tournant pour être déplacées selon un mouvement de va-et-vient par translation circulaire. Le dispositif comprend un premier disque tournant 9 d'axe de rotation A, et un deuxième disque tournant 9' d'axe de rotation A', montés sur la partie supérieure d'un châssis (non représenté), les deux axes de rotation A, A' étant disposés parallèlement entre eux et sensiblement perpendiculairement à la direction d'avancement F d'un boudin B à portionner défilant en continu. Une première paire de pinces comprend une première pince 101 montée pivotante sur le premier disque tournant 9 autour d'un axe de rotation C disposé parallèlement à l'axe A du disque et à distance de ce dernier, et une deuxième pince 101' montée de manière analogue sur le deuxième disque 9' autour d'un axe de rotation C' parallèle à l'axe A'.

La première pince 101 comprend plusieurs plaques de pincement 102, par exemple au nombre de quatre, parallèles entre elles, et espacées les unes des autres. Chaque plaque présente à son extrémité avant une encoche qui définit un bord de pincement 121 en forme générale de V. Les plaques principales sont solidaires d'un support de montage 170 par laquelle la pince est montée pivotante sur le premier disque, ses plaques étant disposées parallèlement à l'axe de rotation C. De manière similaire, la deuxième pince 101' comprend quatre plaques de pincement 102' avec des bords de pincement 121', et une partie de montage 170'. Les disques sont entraînés en rotation autour de leur axe A et A' dans des directions inverses, de sorte que les pinces se déplacent dans la direction d'avancement F du boudin lorsqu'elles sont en contact avec cette dernière, et à la même vitesse que celle du boudin, et les pinces sont entraînées en rotation sur les disques autour de leur axe C et C' de manière à rester disposées constamment perpendiculaires à la direction d'avancement F, et parallèles entre elles, avec leur bord de pincement en vis-à-vis. Lors du déplacement des pinces vers la position fermée, les plaques principales d'une pince viennent s'intercaler avec celles de l'autre pince de sorte que deux plaques successives se chevauchent à la manière d'une cisaille et forment par leurs bords avant un passage ou diaphragme dont la section diminue progressivement, pour progressivement pincer le boudin et chasser progressivement le produit alimentaire de la zone de pincement.

Le dispositif comporte un système de coupe comprenant une lame plane (non visible), montée de manière pivotante sur la première pince. La lame est sollicitée élastiquement par un ressort dans une position rétractée dans laquelle la lame est disposée entre deux plaques, en retrait par rapport à leur bord de pincement. La lame est apte à coopérer avec l'extrémité libre d'un doigt d'actionnement 162 monté sur la deuxième pince dans la position fermée des pinces pour faire pivoter la lame à l'encontre du ressort vers une position active pour couper la zone pincée du boudin. Tel qu'illustré sur la figure 1, les disques tournant comprennent une deuxième paire de pinces. Sur chaque disque, les pinces sont disposées symétriquement de part et d'autre de l'axe de rotation du disque.

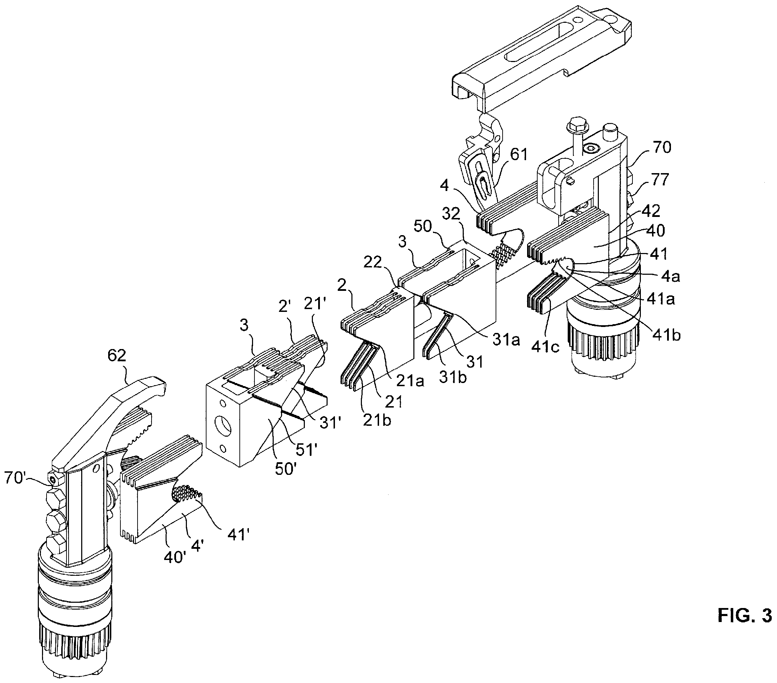

Les figures 2 et 3 illustrent une paire de pince 1, 1' selon l'invention, comprenant une première pince 1 et une deuxième pince 1' pouvant être utilisée sur le dispositif de la figure 1, à la place des paires de pinces 101, 101' décrites précédemment.

La première pince 1 comprend des plaques de pincement centrales 2, des plaques de pincement latérales 3 disposées de part et d'autre des plaques de pincement centrales, et des patins maintien 4 disposés de part et d'autre des plaques de pincement latérales, formés de plusieurs plaques de maintien 40. Les plaques 2, 3, 40 sont montées sur une structure support 70 de montage par laquelle la pince est montée pivotante sur un disque autour de l'axe C précité. Les plaques 2, 3, 40 ont toute la même épaisseur, sont disposées parallèlement entre elles, parallèlement à l'axe de rotation C et perpendiculairement à la direction d'avancement du boudin, et sont espacées les unes des autres d'un même écartement. Dans le présent mode de réalisation, la première pince comprend quatre plaques de pincement centrales 2, deux plaques de pincement latérales 3 disposées de chaque côté de l'ensemble de quatre plaques de pincement centrales, et quatre plaque de maintien 40 disposées à côté de chaque ensemble de deux plaques de pincement latérales.

Chaque plaque de pincement centrale 2 présente à son extrémité avant une encoche qui définit un bord de pincement 21 en forme générale de V, et chaque plaque de pincement latérale 3 présente à son extrémité avant une encoche qui définit un bord avant de pincement 31 en forme générale de V, lesdits bords de pincement 21 et 31 présentent des profils identiques, avec deux portions inclinées 21b, 31b reliées entre elles par une portion de fond 21a, 31a concave.

Chaque plaque de maintien 40 présente à son extrémité avant une encoche qui définit un bord de maintien 41. Les bords de maintien des plaques de maintien présentent des profils identiques, avec une portion de fond 41a concave sensiblement semi-circulaire se prolongeant à chaque extrémité par deux portions inclinées 41b, 41c. Le diamètre de la portion de fond 41a est ici inférieur au diamètre du boudin B à portionner.

Les plaques de pincement centrales 2 sont formées à partir d'une même pièce, avec une embase 22 depuis laquelle les plaques centrales s'étendent parallèlement entre elles. Les plaques de pincement latérales 3 sont formées à partir d'une même pièce de forme générale en U, avec une embase 32 formant la base du U, depuis laquelle deux ensembles de plaques de pincement latérales s'étendent pour former les branches du U. Les plaques de pincement centrales 2 sont placées entre les deux ensembles de plaques de pincement latérales et sont montées coulissantes sur le support de montage, perpendiculairement à l'axe C. Les plaques de pincement latérales sont montées coulissantes sur le support perpendiculairement à l'axe C.

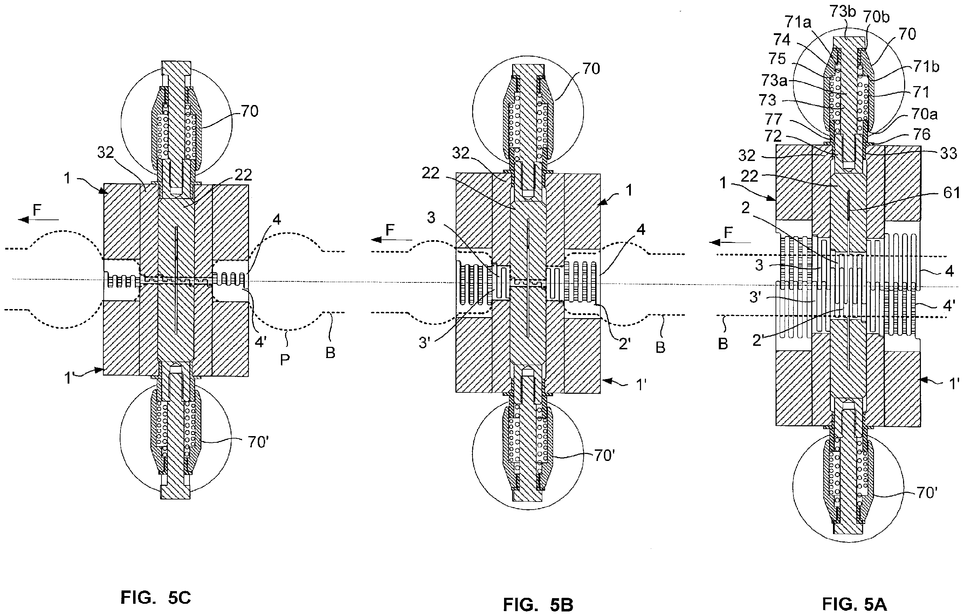

Pour ce montage coulissant, en référence à la figure 5A, l'embase 22 des plaques de pincement centrales est solidaire d'une tige de montage 72, 73, passant par un alésage 33 de l'embase 32 des plaques latérales et montée coulissante dans un alésage 71 du support 70 qui s'étend perpendiculairement à l'axe C de montage de la face avant 70a à la face arrière 70b du support. La tige de montage est formée d'un embout 72 tubulaire, muni d'un trou taraudé, qui est assemblé à l'embase 32, et d'un boulon 73 dont l'extrémité filetée de sa tige 73a est vissée dans l'embout 72, et dont la tête 73b est apte à venir en appui contre la face arrière du support.

Les plaques centrales et les plaques latérales sont sollicitées élastiquement, respectivement par des premiers moyens élastiques 74, et des seconds moyens élastiques 75, vers une position de repos illustrée à figure 5A, dans laquelle la tête 73b de boulon est en appui contre la face arrière 70b du support, et les plaques latérales sont décalées par rapport aux plaques centrales de sorte que leurs bords de pincement 31 soient décalés vers l'extérieur par rapport aux bords de pincement 21 des plaques centrales. L'embase 22 des plaques centrales est disposée à distance de l'embase 32 des plaques latérales. Dans cette position de repos, l'embase 32 des plaques latérales est disposée à distance du support de montage 70.

Les premiers moyens élastiques agissant sur les plaques centrales comprennent un premier ressort 74 de compression hélicoïdal monté autour de la tige 73a du boulon et venant en appui contre un premier épaulement 71a interne de l'alésage 71 et contre le bord circulaire de l'embout 72.

Les seconds moyens élastiques agissant sur les plaques latérales comprennent un second ressort 75 de compression hélicoïdal, coaxial au premier ressort, de diamètre plus grand, et venant en appui contre un second épaulement 71b interne de l'alésage et contre l'embase des plaques latérales. Dans le présent mode de réalisation, l'alésage 33 de l'embase 32 est équipé d'une bague 76 de guidage avec collerette. L'embout 72 des plaques centrales coulisse dans ladite bague et dans un tube de guidage 77 disposé en appui contre ladite bague et coulissant dans l'alésage 71 du support. Le second ressort 75 est monté en appui contre ledit second épaulement 71b et le bord arrière du tube de guidage.

Tel que décrit ci après, les plaques centrales 2 sont aptes à se déplacer par rapport à leur support à l'encontre du premier ressort 74, de la position de repos vers une position escamotée intermédiaire, dans laquelle les bords de pincement 21 des plaques centrales 2 et ceux 31 des plaques latérales 3 sont alignés, l'embase 22 des plaques centrales en butée contre l'embase 32 des plaques latérales. Lorsque les plaques centrales sont dans leur position escamotée intermédiaire, et les plaques latérales dans leur position de repos, les plaques centrales et les plaques latérales sont aptes à se déplacer à l'encontre des ressorts 74, 75 vers une position escamotée dans laquelle les plaques latérales viennent par leur embase 32 en butée contre le support, avec la collerette de la bague 76 intercalée entre le support et ladite embase.

Des tiges de guidage secondaires 78 (Fig. 2) sont montées dans des alésages du support, au-dessus et au-dessous du boulon 73, et présentent des extrémités qui coulissent dans des alésages de l'embase 32 pour guider le coulissement des plaques latérales, parallèlement à l'axe C.

Un patin 4 formé de quatre plaques de maintien 40 est fixé sur le coté de chaque ensemble de deux plaques latérales, de sorte que les portions semi-circulaires 41a des bords de maintien soient décalées vers l'arrière par rapport aux bords de pincement des plaques latérales. Chaque patin 4 est formé d'une même pièce avec une embase 42 depuis laquelle s'étendent les quatre plaques de maintien les portions de fond 41a des bords des plaques formant une surface de maintien 4a du patin. Les quatre plaques de maintien sont assemblées de manière fixe par leur embase 42 à l'embase 32 des plaques latérales 2 via des moyens d'assemblage (non représentés).

La deuxième pince 1' est sensiblement identique à la première pince. Elle comprend des plaques de pincement centrales 2', au nombre de quatre, avec des bords de pincement 21', deux ensembles de deux plaques de pincement latérales 3' disposées de part et d'autre des plaques de pincement centrales, munies de bords de pincement 31', et deux patins 4' de quatre plaques de maintien 40' avec des bords de maintien 41'. Ces plaques 2', 3', 40' sont montées comme précédemment sur un support de montage 70'.

Lors du déplacement des pinces 1, 1' vers la position fermée, les plaques d'une pince viennent s'intercaler avec celles de l'autre pince.

Chaque pince comprend des plaques intermédiaires 50, 50' disposées en alternance avec les plaques de pincement centrales et latérales, et les plaques de maintien. Chaque plaque intermédiaire d'une pince comprend un bord d'appui 51', de forme complémentaire du bord de la plaque de pincement ou de la plaque de maintien de l'autre pince, qui sera disposée en vis-à-vis en position fermée des pinces. Le bord d'appui des plaques intermédiaires comprend une portion centrale concave, de forme analogue à celle la portion concave de la plaque disposée en vis-à-vis, et des portions inclinées contre lesquelles les portions inclinées du bord de la plaque en vis-à-vis sont aptes à venir en butée lors du rapprochement des pinces, tel que décrit ci-après. Dans le présent mode de réalisation, pour chaque pince, les plaques centrales et ses plaques intermédiaires associées sont formées d'une même pièce, les portions concaves desdites plaques étant alignées. De même, les plaques latérales et ses plaques intermédiaires associées sont formées d'une même pièce, leurs portions concaves étant alignées. Chaque ensemble de quatre plaques de maintien et ses plaques intermédiaires associées sont formées d'une même pièce, leurs portions concaves étant alignées et forment ainsi une surface de maintien 4a continue.

Chaque pince comprend un patin dont les plaques de maintien comprennent des portions inclinés 41b supérieures crantées et des portions inclinées 41c inférieures, non crantées, dit continues ou lisses, et un patin dont les plaques de maintien comprennent des portions inclinées inférieures crantées et des portions inclinées supérieures continues. Pour deux patins en vis-à-vis, un patin d'une pince a des portions inclinées supérieures crantées et des portions inclinées inférieurs continues, et le patin de l'autre pince a des portions inclinées supérieures continues et des portions inclinées inférieures crantées.

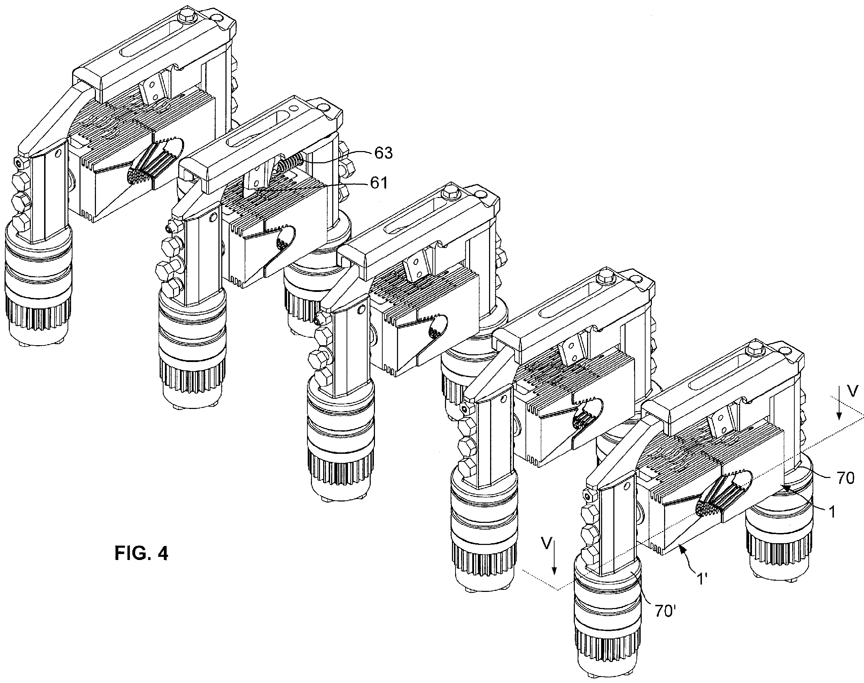

Le système de coupe comprend une lame 61 plane, montée de manière pivotante sur le support de montage 70 de la première pince, autour d'un axe de rotation perpendiculaire aux plaques. La lame est disposée entre deux plaques centrales et est sollicitée élastiquement par un ressort 63 (Fig 4) dans une position rétractée dans laquelle la lame est disposée entre deux plaques centrales, en retrait par rapport à leur bord de pincement. La lame est apte à coopérer avec l'extrémité libre d'un doigt d'actionnement 62 monté sur la deuxième pince, tel que décrit ci-après, pour faire pivoter la lame à l'encontre du ressort vers une position active pour couper la zone pincée du boudin.

Le fonctionnement d'une paire de pince pour la mise en portion d'un boudin va à présent être décrit en référence aux figures 5A à 5E.

La figure 5A illustre une position ouverte des pinces dans laquelle les pinces viennent juste en contact avec le boudin B par les bords de pincement des plaques centrales. Les plaques 2, 3, 40 de la première pince viennent s'intercaler avec les plaques 2', 3', 40' de la deuxième pince. Les plaques centrales et les plaques latérales sont sollicitées par leur ressort 74, 75 dans leur position de repos.

La rotation des disques entraîne un déplacement des supports de montage 70, 70' l'un vers l'autre, perpendiculairement à la direction F d'avancement du boudin. Lors de ce rapprochement, le boudin est pincé par les bords de pincement 21 des plaques centrales et les bords de pincement 31 des plaques latérales. Les pinces se rapprochent l'une de l'autre jusqu'à la position fermée intermédiaire illustrée à la figure 5B, dans laquelle les plaques centrales d'une pince viennent en butée contre les plaques intermédiaires de l'autre pince. Dans cette position fermée intermédiaire, les diaphragmes formés par les bords de pincement des plaques centrales présentent des sections minimales. L'enveloppe est vidée sur un tronçon central d'enveloppe correspondant aux largeurs des plaques centrales des pinces Les bords de pincement des plaques latérales sont en retrait par rapport aux bords de pincement des plaques centrales, comme dans la position ouverte. Les bords de maintien des plaques de maintien sont contre le boudin et permettent de guider le produit alimentaire chassé par les plaques centrales et les plaques latérales vers le centre des portions à former.

Lorsque les deux supports de montage se rapprochent davantage, les plaques centrales en butée contre les plaques intermédiaires coulissent vers l'extérieur, entre les plaques latérales, et les plaques latérales des pinces se rapprochent les unes des autres jusqu'à la position fermée des pinces illustrée à la figure 5C. Dans cette position fermée, les plaques latérales définissent des diaphragmes latéraux ayant des sections minimales égales à celles des diaphragmes centraux formés par les plaques centrales. L'enveloppe est vidée sur deux tronçons latéraux supplémentaires de part et d'autre du tronçon central précité. Les plaques centrales sont dans la position escamotée intermédiaire, en butée par leur embase contre l'embase des plaques latérales. Les plaques latérales sont en butée contre les plaques intermédiaires disposée en vis-à-vis et sont toujours en position de repos par rapport à leur support de montage. Les plaques de maintien montées fixes par rapport aux plaques latérales forment des diaphragmes extérieurs globalement circulaires, dont les sections sont inférieures à celle du boudin, permettant de guider le produit alimentaire au-delà des plaques de maintien. La pression interne P dans l'enveloppe est écartée du tronçon central vide et des tronçons latéraux vides de l'enveloppe. Lors du déplacement de la position fermée intermédiaire vers la position fermée, les portions inclinées crantées des patins qui sont disposées en amont des plaques latérale par rapport à la direction d'avancement, font tourner le boudin dans un sens de rotation (sens antihoraire sur les figures) en amont des pinces, et les portions inclinées crantées des patins aval font tourner le boudin dans le sens inverse de rotation en aval des pinces, créant ainsi un tronçon central torsadé.

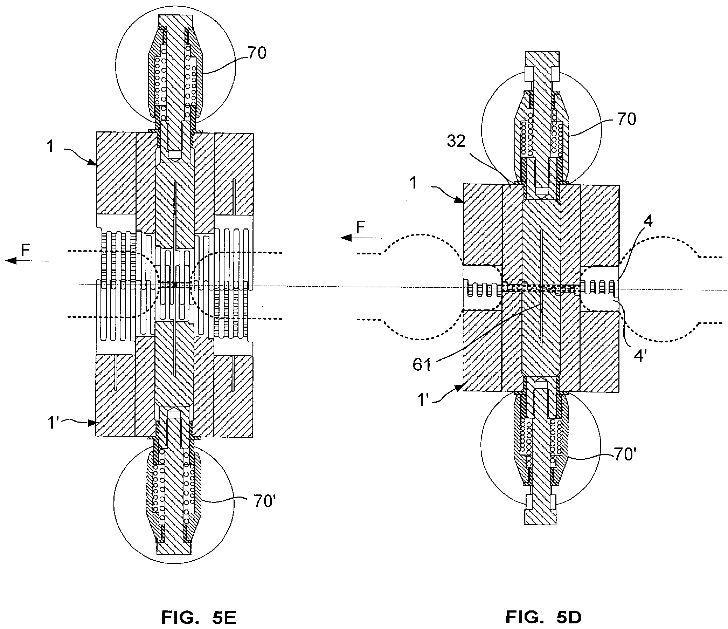

Lors d'un rapprochement supplémentaire des supports 70, 70', les plaques centrales et les plaques latérales, en butée contre les plaques intermédiaires, coulissent vers leur support de montage, à l'encontre des ressorts 74, 75, jusqu'à la position dite de coupe des pinces illustrée à la figure 5D. Dans cette position de coupe, les plaques principales et les plaques latérales sont dans une position escamotée, dans laquelle les plaques centrales sont en butée contre l'embase des plaques latérales, et les plaques latérales sont en butée par leur embase contre les supports de montage. De la position fermée de la figure 5C à la position de coupe de la figure 5D, les supports de montage se rapprochent l'un de l'autre, sans déplacement relatif des plaques les unes par rapport aux autres. Lors de ce rapprochement des supports, le doigt 62 vient manoeuvrer la lame 61 pour la déplacer vers sa position active pour couper le boudin au milieu du tronçon central vide torsadé de l'enveloppe.

Les supports sont ensuite écartés l'un de l'autre tel qu'illustré à la figure 5E, qui illustre une position ouverte des pinces analogue à celle de la figure 5A. Les plaques centrales et les plaques latérales reviennent vers leur position de repos sous l'effet des ressorts. Le produit alimentaire présent dans l'enveloppe revient dans les tronçons vides de l'enveloppe. Des petites queues vides torsadées d'enveloppe demeurent toutefois en extrémités de chaque portion.

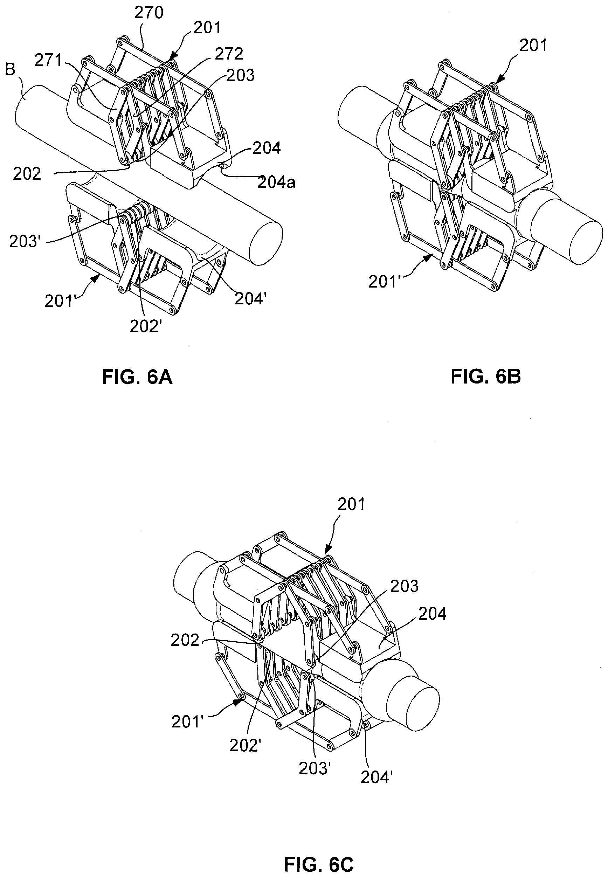

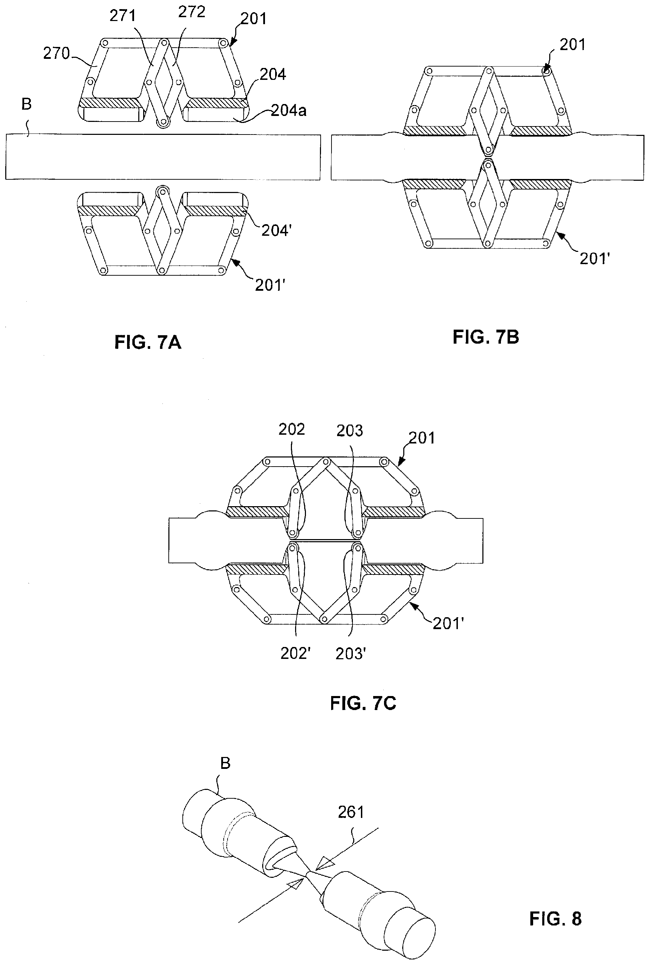

Les figures 6A à 6C et 7A à 7B représentent une paire de pinces selon un deuxième mode de réalisation, ladite paire comprenant une première pince 201 et une deuxième pince 201' disposées de part et d'autre du boudin B.

Chaque pince comprend des premiers galets 202, 202' et des seconds galets 203, 203' montés rotatifs respectivement aux extrémités de premières biellette 271 et de secondes biellettes 272 d'un système support 270, autour d'axes de rotation perpendiculaire à la direction d'avancement du boudin. Dans la position ouverte des pinces illustrée aux figures 6A et 7A, les premiers et seconds galets d'une pince sont disposés de façon alternée en une rangée, leurs axes de rotation étant sensiblement alignés. Chaque pince comprend de part et d'autre des premiers et seconds galets, un patin de maintien 204, 204' muni d'une surface de maintien 204a concave. Chaque pince comprend un premier patin, appelé également patin gauche, et un second patin, appelé également patin droit.

En position ouverte, les galets 202, 203 et les patins 204 des pinces sont disposés en vis-à-vis, à distance du boudin, les surfaces de maintien 204a des patins 204, 204' étant décalées vers l'extérieur par rapport aux galets. Un système d'actionnement (non représenté) est apte à déplacer les pinces l'une vers l'autre transversalement au boudin jusqu'à une position fermée intermédiaire illustrée aux figures 6B et 7B, dans laquelle les premiers et second galets des pinces pincent le boudin et vide son enveloppe sur un premier tronçon central. Dans cette position fermée intermédiaire, les patins sont en contact par leur surface de maintien contre le boudin de part et d'autre du tronçon central vidé. Le système d'actionnement agit ensuite sur les systèmes support des pinces pour déplacer simultanément les premiers galets 202, 202' et les premiers patins, longitudinalement, parallèlement au boudin, à l'opposé du premier tronçon vidés, vers la gauche, et pour déplacer simultanément les seconds galets 203, 203' et les seconds patins, longitudinalement, à l'opposé du tronçon central vidé, vers la droite, jusqu'à la position fermée des pinces illustrée aux figures 6C et 7C.

Lors de ce déplacement longitudinal, les premiers et seconds galets chassent progressivement le produit de l'enveloppe de part et d'autre du tronçon central, sur deux seconds tronçons latéraux. L'enveloppe est vidée à plat par les galets et présente des tronçons vidés plats d'enveloppe. Lorsque le produit est vidé de l'enveloppe, l'enveloppe est maintenue par les patins de maintien. Le boudin est ensuite coupé au niveau du tronçon central vidé par des moyens de coupe illustrés schématiquement sous la référence 261 sur la figure 8. Après la coupe, les pinces sont ramenées dans leur position ouverte des figures 6A et 7A.

Bien que l'invention ait été décrite en liaison avec deux modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif de mise en portions d'un boudin (B) continu, en particulier pour la réalisation de saucisses, comprenant au moins une paire de pinces (1, 1'; 201, 201') opposées aptes à être déplacées l'une vers l'autre par des moyens d'actionnement d'une position ouverte vers une position fermée pour pincer le boudin, chaque pince de la paire comprenant des moyens de pincement (2, 2', 3, 3'; 202, 202'; 203, 203') aptes à être manoeuvrés par lesdits moyens d'actionnement (70, 9; 70', 9') pour pincer le boudin sur un tronçon central de boudin dans une première position, puis déplacés dans une seconde position pour pincer le boudin sur des tronçons latéraux de boudin disposés de part et d'autre du tronçon central, **caractérisé en ce que** chaque pince de la paire comprend des moyens de pincement centraux (2, 2') et des moyens de pincement latéraux (3, 3') disposés de chaque côté des moyens de pincement centraux, lesdits moyens d'actionnement (70, 9; 70', 9') étant aptes à manoeuvrer les moyens de pincement centraux et les moyens de pincement latéraux des pinces, transversalement au boudin, pour pincer le boudin sur le tronçon central de boudin dans une première position, puis à manoeuvrer les moyens de pincement latéraux par rapport aux moyens de pincement centraux dans une seconde position, transversalement au boudin, pour pincer le boudin de part et d'autre des moyens de pincement centraux sur les tronçons latéraux de boudin.

2. Dispositif selon la revendication 1, **caractérisé en ce que** chaque pince (1, 1', 201, 201') comprend en outre des moyens de maintien (4, 4'; 204, 204'), disposés de part et d'autre des moyens de pincement, aptes à être déplacés par lesdits moyens d'actionnement pour venir contre le boudin sur des tronçons extérieurs du boudin disposés de part et d'autre des tronçons latéraux, dans la position fermée des pinces, pour maintenir ledit boudin.

3. Dispositif selon la revendication 2, **caractérisé en ce que** les moyens de maintien comprennent au moins un patin de maintien (4, 4' ; 204, 204') disposé de part et d'autre des moyens de pincement, et muni d'une surface de maintien (4a, 204a) qui est décalée transversalement vers l'extérieur par rapport aux moyens de pincement dans la position ouverte des pinces et dans la position fermée des pinces.

4. Dispositif selon la revendication 1, **caractérisé en ce que**
- les moyens de pincement centraux comprennent au moins une plaque de pincement centrale (2, 2') munie en extrémité d'un bord de pincement (21),
- et les moyens de pincement latéraux comprennent au moins une plaque de pincement latérale (3, 3') disposée de chaque côté de la plaque de pincement centrale, et munie en extrémité d'un bord de pincement (31),
les deux pinces étant décalées l'une par rapport à l'autre de sorte que, lors de leur déplacement vers la position fermée, les plaques de pincement centrale et latérales des pinces forment par leurs bords de pincement respectivement un passage central et deux passages latéraux dont les sections diminuent progressivement,
pour chaque pince, les bords de pincement (31) des plaques latérales (3) sont décalés transversalement vers l'extérieur par rapport au bord de pincement (21) de la plaque de pincement centrale (2) dans la position ouverte des pinces, lesdits moyens d'actionnement (70, 9; 70', 9') étant aptes
- à manoeuvrer la plaque de pincement centrale (2) et les plaques de pincement latérales (3) pour diminuer progressivement et simultanément les sections des passages latéraux et du passage central, de la position ouverte des pinces jusqu'à une position fermée intermédiaire dans laquelle le passage central présente une section minimale et les passages latéraux présentent des sections supérieures à la section minimale du passage central,
- puis à manoeuvrer les plaques de pincement latérales (3) pour diminuer progressivement les sections des passages latéraux, de la position fermée intermédiaire jusqu'à la position fermée dans laquelle les passages latéraux présentent des sections minimales identiques à la section minimale du passage central.

5. Dispositif selon les revendications 3 et 4, **caractérisé en ce que** chaque patin (4) comprend au moins une plaque de maintien (40) disposée du côté extérieur de chaque plaque de pincement latéral (3), et munie en extrémité d'un bord de maintien (41) dont une portion de fond (41a) forme ladite surface de maintien (4a), les bords de maintien étant décalés transversalement vers l'extérieur par rapport aux bords de pincement (31) des plaques latérales (3) dans la position ouverte des pinces,
les plaques de maintien forment par leur bord de maintien respectivement un passage extérieur dont la section diminue progressivement lors du déplacement des pinces vers la position fermée,
lesdits moyens d'actionnement (70, 9; 70', 9') étant aptes à manoeuvrer les plaques de maintien (40) pour diminuer progressivement et simultanément les passages extérieurs, de la position ouverte jusqu'à la position fermée intermédiaire, dans laquelle les passages extérieurs présentent des sections supérieures aux sections des passages latéraux, puis de la position fermée intermédiaire jusqu'à la position fermée dans laquelle les passages extérieurs présentent des sections supérieures aux sections minimales des passages latéraux.

6. Dispositif selon la revendication 5, **caractérisé en ce que** le bord de maintien (41) de chaque plaque de maintien (40) d'un patin (4) comprend une portion de fond (41 a), formant la surface de maintien (4a), se prolongeant par une portion supérieure (41b) et une portion inférieure (41c),
- chaque pince comprend un patin dont chaque plaque de maintien comprend une portion supérieure (41b) crantée et une portion inférieure (41c) continue, et un patin dont chaque plaque de maintien comprend une portion inférieure crantée et une portion supérieure continue,
- et pour deux patins en vis-à-vis, chaque plaque de maintien du patin d'une pince a une portion supérieure crantée et une portion inférieure continue, et chaque plaque de maintien du patin de l'autre pince a une portion supérieure continue et une portion inférieure crantée.

7. Dispositif selon l'une des revendications 4 à 6, **caractérisé en ce que** chaque pince (1, 1') comprend au moins deux plaques de pincement centrales (2, 2') et/ou au moins deux plaques de pincement latérales (3, 3') de chaque côte de la ou des plaques de pincement centrales.

8. Dispositif selon la revendication 7, **caractérisé en ce que** chaque pince (1, 1') comprend au moins quatre plaques de pincement centrales (2), et au moins deux plaques de pincement latérales (3) de chaque côte des plaques de pincement centrales.

9. Dispositif selon l'une des revendications 5 à 8, **caractérisé en ce que** chaque pince (1, 1') comprend au moins deux plaques de maintien (40) de part et d'autres des plaques de pincement centrale et latérales.

10. Dispositif selon la revendication 9, **caractérisé en ce que** chaque pince (1, 1') au moins quatre plaques de maintien (40) de part et d'autre des plaques de pincement centrale (2) et latérales (3).

11. Dispositif selon l'une des revendications 4 à 10, **caractérisé en ce que** les plaques de pincement centrales (2, 2') et les plaques de pincement latérales (3, 3') de chaque pince (1, 1') sont montées sur un support de montage (70, 70'), lesdits moyens d'actionnement étant aptes à déplacer les supports de montage selon au moins un mouvement de va-et-vient perpendiculaire à la direction (F) de transport du boudin, les plaques de pincement centrales (2) étant montées coulissantes sur leur support de montage et étant sollicitées par des premiers moyens élastiques (74) vers une position de repos, lesdites plaques centrales d'une pince étant aptes à venir en butée contre des bords d'appui (51') de plaques intermédiaires (50, 50') de l'autre pince dans la position fermée intermédiaire des pinces et à se déplacer par rapport à leur support de montage vers une position escamotée intermédiaire lorsque les pinces sont déplacées de la position fermée intermédiaire vers la position fermée.

12. Dispositif selon l'une des revendications 4 à 11, **caractérisé en ce qu'**il comporte des moyens de coupe comprenant au moins une lame (61) associée à la paire de pinces apte à être manoeuvrée par des moyens d'actionnement (62) entre deux plaques de pincement centrales adjacentes pour couper le boudin.

13. Dispositif selon les revendications 11 et 12, **caractérisé en ce que** la lame (61) est montée pivotante sur le support de montage (70) d'une première pince (1), lesdits moyens d'actionnement étant aptes à faire pivoter ladite lame entre une position rétractée et une position active de coupe, la lame (61) est sollicitée par des moyens de rappel élastiques vers sa position rétractée, les moyens d'actionnement de la lame étant montés sur la deuxième pince (1') de la paire et comprennent un doigt (62) monté sur le support de montage (70') de la deuxième pince, apte à venir contre la lame (61) pour la manoeuvrer la lame vers sa position active à l'encontre des moyens de rappel élastiques.

14. Dispositif selon la revendication 13, **caractérisé en ce que** les plaques de pincement latérales (3, 3') sont montées coulissantes sur leur support de montage (70, 70') et sont sollicitées par des seconds moyens élastiques (75) dans une position de repos, lesdites plaques de pincement latérales d'une pince étant aptes à venir en butée contre des bords d'appui (51') de plaques intermédiaires (50, 50') de l'autre pince dans la position fermée des pinces, les plaques de pincement centrales et les plaques de pincement latérales étant aptes à se déplacer par rapport à leur support de montage vers une position escamotée lorsque lesdites pinces sont déplacées de la position fermée vers une position dite de coupe par rapprochement de leur support de montage, le doigt (62) déplaçant la lame (61) de sa position rétractée vers sa position active lors de ce déplacement de la position fermée vers la position de coupe.

15. Procédé de mise en portions d'un boudin continu formé d'un produit alimentaire recouvert d'une enveloppe utilisant un dispositif selon l'une des revendications 1 à 14 et comprenant une étape de pincement, dans laquelle le boudin est pincé pour chasser le produit alimentaire et vider l'enveloppe sur un tronçon d'enveloppe, **caractérisé en ce que** ladite étape de pincement comprend
- le pincement de l'enveloppe pour vider l'enveloppe sur un premier tronçon central d'enveloppe dans une première position des moyens de pincement,
- puis le pincement de l'enveloppe de part et d'autre dudit tronçon central pour vider l'enveloppe sur deux tronçons latéraux d'enveloppe, disposés de part et d'autre du tronçon central, dans une deuxième position après déplacement des moyens de pincement par rapport à la première position.

16. Procédé selon la revendication 15, **caractérisé en ce qu'**il comprend lors de l'étape de pincement, le maintien du boudin sur des tronçons extérieurs d'enveloppe adjacents auxdits tronçons latéraux pour guider le déplacement du produit alimentaire lorsque le produit alimentaire est chassé du tronçon central et des tronçons latéraux, et pour conserver une section donnée au boudin sur lesdits tronçons latéraux.

17. Procédé selon la revendication 15, **caractérisé en ce que** le pincement de l'enveloppe sur les deux tronçons latéraux commence avant que ledit tronçon central soit vidé.

18. Procédé selon l'une des revendications 15 à 17, **caractérisé en ce qu'**il comporte une étape de coupe comprenant la coupe de l'enveloppe au niveau du tronçon central après le pincement de l'enveloppe sur les tronçons latéraux.

## Patentansprüche

1. Vorrichtung zum Portionieren eines fortlaufenden Wurststrangs (B), im Speziellen zur Herstellung von Würsten, zumindest ein Paar an gegenüber liegenden Klammern (1, 1'; 201, 201') umfassend, die imstande sind, durch Betätigungsmittel zueinander von einer offenen Position in eine geschlossene Position bewegt zu werden, um den Wurststrang zu klemmen, wobei jede Klammer des Paares Klemmmmittel (2, 2'; 3, 3'; 202, 202'; 203, 203') umfasst, die imstande sind, durch die besagten Betätigungsmittel (70, 9; 70', 9') manövriert zu werden, um den Wurststrang an einem zentralen Wurststrang-Abschnitt in einer ersten Position zu klemmen, danach in eine zweite Position verschoben zu werden, um den Wurststrang an den seitlichen Wurststrang-Abschnitten zu klemmen, die beiderseits des zentralen Abschnitts angeordnet sind, **dadurch gekennzeichnet, dass** jede Klammer des Paares zentrale Klemmmittel (2, 2') und seitliche Klemmmittel (3, 3') umfasst, die auf jeder Seite der zentralen Klemmmittel angeordnet sind, wobei die besagten Betätigungsmittel (70, 9; 70', 9') imstande sind, die zentralen Klemmmittel und die seitlichen Klemmmittel der Klammern querlaufend zum Wurststrang zu manövrieren, um den Wurststrang am zentralen Wurststrang-Abschnitt in einer ersten Position zu klemmen, danach die seitlichen Klemmmittel im Verhältnis zu den zentralen Klemmmitteln in eine zweite Position querlaufend zum Wurststrang zu manövrieren, um den Wurststrang beiderseits der zentralen Klemmmittel an den seitlichen Wurststrang-Abschnitten zu klemmen.

2. Vorrichtung nach Anspruch 1, **dadurch gekennzeichnet, dass** jede Klammer (1, 1'; 201, 201') darüber hinaus Festhaltemittel (4, 4'; 204, 204') umfasst, die beiderseits der Klemmmittel angeordnet sind, die imstande sind, durch die besagten Betätigungsmittel verschoben zu werden, um sich in der geschlossenen Position der Klammern an den äußeren Abschnitten des Wurststrangs am Wurststrang anzulegen, die beiderseits der seitlichen Abschnitte angeordnet sind, um den besagten Wurststrang festzuhalten.

3. Vorrichtung nach Anspruch 2, **dadurch gekennzeichnet, dass** die Festhaltemittel zumindest einen Festhaltebügel (4, 4'; 204, 204') umfassen, der beiderseits der Klemmmittel angeordnet ist, und mit einer Festhaltefläche (4a, 204a) versehen ist, die im Verhältnis zu den Klemmmitteln in der offenen Position der Klammern und in der geschlossenen Position der Klammern querlaufend versetzt ist.

4. Vorrichtung nach Anspruch 1, **dadurch gekennzeichnet, dass**
- die zentralen Klemmmmittel zumindest eine zentrale Klemmplatte (2, 2') umfassen, die am Ende mit einem Klemmrand (21) versehen ist,
- und die seitlichen Klemmmittel zumindest eine seitliche Klemmplatte (3, 3') umfassen, die auf jeder Seite der zentralen Klemmplatte angeordnet ist, und am Ende mit einem Klemmrand (31) versehen ist,
wobei die beiden Klammern zueinander versetzt sind, sodass bei ihrer Bewegung in die geschlossene Position die zentralen und die seitlichen Klemmplatten der Klammern durch ihre Klemmränder jeweils einen zentralen Durchlass und zwei seitliche Durchlässe bilden, deren Querschnitte schrittweise kleiner werden,
bei jeder Klammer die Klemmränder (31) der seitlichen Platten (3) im Verhältnis zum Klemmrand (21) der zentralen Klemmplatte (2) in die offene Position der Klammern querlaufend nach außen versetzt sind, wobei die besagten Betätigungsmittel (70, 9; 70', 9') imstande sind,
- die zentrale Klemmplatte (2) und die seitlichen Klemmplatten (3) zu manövrieren, um die Querschnitte der seitlichen Durchlässe und des zentralen Durchlasses schrittweise und gleichzeitig von der offenen Position der Klammern bis zu einer geschlossenen Zwischenposition zu verringern, in der der zentrale Durchlass einen minimalen Querschnitt aufweist und die seitlichen Durchlässe Querschnitte aufweisen, die größer sind, als der Mindestquerschnitt des zentralen Durchlasses,
- danach die seitlichen Klemmplatten (3) zu manövrieren, um die Querschnitte der seitlichen Durchlässe von der geschlossenen Zwischenposition bis zur geschlossenen Position schrittweise zu verringern, in der die seitlichen Durchlässe identische Mindestquerschnitte aufweisen, wie der Mindestquerschnitt des zentralen Durchlasses.

5. Vorrichtung nach den Ansprüchen 3 und 4, **dadurch gekennzeichnet, dass** jeder Bügel (4) zumindest eine Festhalteplatte (40) umfasst, die an der Außenseite einer jeden seitlichen Klemmplatte (3) angeordnet ist, und am Ende mit einem Festhalterand (41) versehen ist, von dem ein Bodenabschnitt (41a) die besagte Festhaltefläche (4a) bildet, wobei die Festhalteränder im Verhältnis zu den Klemmrändern (31) der seitlichen Platten (3) in der offenen Position der Klammern querlaufend nach außen versetzt sind,
wobei die Festhalteplatten durch ihren Festhalterand jeweils einen äußeren Durchlass bilden, dessen Querschnitt bei der Bewegung der Klammern in die geschlossene Position schrittweise kleiner wird,
wobei die besagten Betätigungsmittel (70, 9; 70', 9') imstande sind, die Festhalteplatten (40) zu manövrieren, um die äußeren Durchlässe schrittweise und gleichzeitig von der offenen Position bis zur geschlossenen Zwischenposition zu verringern, in der die äußeren Durchlässe größere Querschnitte aufweisen, als die Querschnitte der seitlichen Durchlässe, und dann von der geschlossenen Zwischenposition bis zur geschlossenen Position, in der die äußeren Durchlässe Querschnitte aufweisen, die größer sind, als die Mindestquerschnitte der seitlichen Durchlässe.

6. Vorrichtung nach Anspruch 5, **dadurch gekennzeichnet, dass** der Festhalterand (41) einer jeden Festhalteplatte (40) eines Bügels (4) einen Bodenabschnitt (41a) umfasst, der die Festhaltefläche (4a) bildet und sich in einem oberen Abschnitt (41b) und einem unteren Abschnitt (41c) fortsetzt,
- jede Klammer einen Bügel umfasst, von dem jede Festhalteplatte einen oberen gerippten Abschnitt (41b) und einen unteren fortlaufenden Abschnitt (41c) umfasst, und einen Bügel, von dem jede Festhalteplatte einen unteren gerippten Abschnitt und einen oberen fortlaufenden Abschnitt umfasst,
- und bei zwei gegenüber liegenden Bügeln jede Festhalteplatte des Bügels einer Klammer einen oberen gerippten Abschnitt und einen unteren fortlaufenden Abschnitt aufweist, und jede Festhalteplatte des Bügels der anderen Klammer einen oberen fortlaufenden Abschnitt und einen unteren gerippten Abschnitt aufweist.

7. Vorrichtung nach einem der Ansprüche 4 bis 6, **dadurch gekennzeichnet, dass** jede Klammer (1, 1') zumindest zwei zentrale Klemmplatten (2, 2') und/ oder zumindest zwei seitliche Klemmplatten (3, 3') auf beiden Seiten der zentralen Klemmplatte(n) aufweist.

8. Vorrichtung nach Anspruch 7, **dadurch gekennzeichnet, dass** jede Klammer (1, 1') zumindest vier zentrale Klemmplatten (2) und zumindest zwei seitliche Klemmplatten (3) auf beiden Seiten der zentralen Klemmplatten aufweist.

9. Vorrichtung nach einem der Ansprüche 5 bis 8, **dadurch gekennzeichnet, dass** jede Klammer (1, 1') zumindest zwei Festhalteplatten (40) beiderseits der zentralen und seitlichen Klemmplatten umfasst.

10. Vorrichtung nach Anspruch 9, **dadurch gekennzeichnet, dass** jede Klammer (1, 1') zumindest vier Festhalteplatten (40) beiderseits der zentralen (2) und seitlichen (3) Klemmplatten umfasst.

11. Vorrichtung nach einem der Ansprüche 4 bis 10, **dadurch gekennzeichnet, dass** die zentralen Klemmplatten (2, 2') und die seitlichen Klemmplatten (3, 3') einer jeden Klammer (1, 1') auf einer Montagehalterung (70, 70') montiert sind, wobei die besagten Betätigungsmittel imstande sind, die Montagehalterungen entsprechend zumindest einer Hin- und Herbewegung senkrecht zur Beförderungsrichtung (F) des Wurststrangs zu bewegen, wobei die zentralen Klemmplatten (2) gleitend auf ihrer Montagehalterung montiert sind, und durch erste elastische Mittel (74) in eine Ruheposition gedrängt werden, wobei die besagten zentralen Platten einer Klammer imstande sind, sich in einer geschlossenen Zwischenposition der Klammern auf Anschlag an den Auflagerändern (51') der Zwischenplatten (50, 50') der anderen Klammer anzulegen, und sich im Verhältnis zu ihrer Montagehalterung in eine eingezogene Zwischenposition zu bewegen, wenn die Klammern von der geschlossenen Zwischenposition, in die geschlossene Position bewegt werden.

12. Vorrichtung nach einem der Ansprüche 4 bis 11, **dadurch gekennzeichnet, dass** sie Schneidmittel umfasst, die zumindest eine Klinge (61) umfassen, die dem Klammernpaar zugeordnet ist, und imstande ist, durch Betätigungsmittel (62) zwischen zwei benachbarten zentralen Klemmplatten manövriert zu werden, um den Wurststrang zu schneiden.

13. Vorrichtung nach den Ansprüchen 11 und 12, **dadurch gekennzeichnet, dass** die Klinge (61) drehend auf der Montagehalterung (70) einer ersten Klammer (1) montiert ist, wobei die besagten Betätigungsmittel imstande sind, die besagte Klinge zwischen einer eingezogenen Position und einer aktiven Schneidposition drehen zu lassen, wobei die Klinge (61) durch elastische Rückholmittel in ihre eingezogene Position gedrängt wird, wobei die Betätigungsmittel der Klinge auf der zweiten Klammer (1') des Paares montiert sind und einen Stift (62) umfassen, der auf der Montagehalterung (70') der zweiten Klammer montiert ist, und imstande ist, sich an der Klinge (61) anzulegen, um die Klinge entgegen die elastischen Rückholmittel in ihre aktive Position zu manövrieren.

14. Vorrichtung nach Anspruch 13, **dadurch gekennzeichnet, dass** die seitlichen Klemmplatten (3, 3') gleitend auf ihrer Montagehalterung (70, 70') montiert sind, und durch zweite elastische Mittel (75) in eine Ruheposition gedrängt werden, wobei die besagten seitlichen Klemmplatten einer Klammer imstande sind, sich in der geschlossenen Position der Klammern auf Anschlag an den Auflagerändern (51') von Zwischenplatten (50, 50') der anderen Klammer anzulegen, wobei die zentralen Klemmplatten und die seitlichen Klemmplatten imstande sind, sich im Verhältnis zu ihrer Montagehalterung in eine eingezogene Position zu bewegen, wenn die besagten Klammern durch Annäherung ihrer Montagehalterung von der geschlossenen Position in eine Schneidposition genannte Position geschoben werden, wobei der Stift (62) die Klinge (61) bei dieser Bewegung von der geschlossenen Position in die Schneidposition von ihrer eingezogenen Position in ihre aktive Position verschiebt.

15. Verfahren zum Portionieren eines fortlaufenden Wurststrangs, der durch ein Lebensmittelprodukt gebildet wird, das von einer Hülle überzogen ist, unter Verwendung einer Vorrichtung nach einem der Ansprüche 1 bis 14, und einen Klemmschritt umfassend, in dem der Wurststrang geklemmt wird, um das Lebensmittelprodukt voranzutreiben, und die Hülle über einen Hüllenabschnitt zu leeren, **dadurch gekennzeichnet, dass** der besagte Klemmschritt Folgendes umfasst :
- das Klemmen der Hülle zum Leeren der Hülle auf einem ersten zentralen Hüllenabschnitt in einer ersten Position der Klemmmittel,
- danach das Klemmen der Hülle beiderseits des besagten zentralen Abschnitts zum Leeren der Hülle auf zwei seitlichen Hüllenabschnitten, die beiderseits des zentralen Abschnitts angeordnet sind, in einer zweiten Position nach Verschieben der Klemmmittel im Verhältnis zur ersten Position.

16. Verfahren nach Anspruch 15, **dadurch gekennzeichnet, dass** es beim Klemmschritt das Festhalten des Wurststrangs an den äußeren Hüllenabschnitten umfasst, die an die seitlichen Abschnitte angrenzen, um die Verschiebung des Lebensmittelproduktes zu führen, wenn das Lebensmittelprodukt aus dem zentralen Abschnitt und den seitlichen Abschnitten geschoben wird, und um einen gegebenen Querschnitt für den Wurststrang an den besagten seitlichen Abschnitten beizubehalten.

17. Verfahren nach Anspruch 15, **dadurch gekennzeichnet, dass** das Klemmen der Hülle an den beiden seitlichen Abschnitten beginnt, bevor der besagte zentrale Abschnitt geleert ist.

18. Verfahren nach einem der Ansprüche 15 bis 17, **dadurch gekennzeichnet, dass** es einen Schneidschritt umfasst, der das Zuschneiden der Hülle im Bereich des zentralen Abschnitts nach dem Klemmen der Hülle an den seitlichen Abschnitten umfasst.

## Claims

1. Device for portioning a continuous strand (B), in particular for the production of sausages, comprising at least one pair of opposing clamps (1, 1'; 201, 201') suitable for being moved towards each other by actuating means, from an open position to a closed position in order to clamp the strand, each clamp of the pair comprising clamping means (2, 2', 3, 3'; 202, 202'; 203, 203') suitable for being manoeuvred by said actuating means (70, 9; 70', 9') in order to clamp the strand along a central strand segment in a first position, and subsequently moved to a second portion to clamp the stand along side strand segments on each side of the central segment, **characterised in that** each clamp of the pair comprises central clamping means (2, 2') and side clamping means (3, 3') arranged on each side of the central clamping means, said actuating means (70, 9; 70', 9') being suitable for manoeuvring the central clamping means and the side clamping means of the clamps, transversally to the strand, in order to clamp the strand the central strand segment in a first position, and subsequently manoeuvring the side clamping means into a second position, transversally to the strand, order to clamp the strand on each side of the central clamping means, along the side strand segments.

2. Device according to claim 1, **characterised in that** each clamp (1, 1', 201, 201') further comprises holding means (4, 4'; 204, 204'), arranged on each side of the clamping means, suitable for being moved by said actuating means in order to abut the strand on the outer segments of the strand arranged on each side of the side segments, in the closed position of the clamps, in order to hold said strand.

3. Device according to claim 2, **characterised in that** the holding means comprise at least one holding block (4, 4'; 204, 204') arranged on each side of the clamping means, and provided with a holding surface (4a, 204a) which is transversally outwardly offset in relation to the clamping means in the open position of the clamps and in the closed position of the clamps.

4. Device according to claim 1, **characterised in that**
- the central clamping means comprise at least one central clamping plate (2, 2') provided at the end with a clamping edge (21),
- and the side clamping means comprise at least one side clamping plate (3, 3') arranged on each side of the central clamping plate, and provided at the end with a clamping edge (31),
the two clamps being offset in relation to each other such that, when moved to the closed position, the central and side clamping plates of the clamps respectively form via the clamping edges thereof one central passage or diaphragm and two side passages or diaphragms with progressively decreasing cross-sections,
for each clamp, the clamping edges (31) of the side plates (3) are transversally outwardly offset in relation to the clamping edge (21) of the central clamping plate (2) in the open position of the clamps, said actuating means (70, 9; 70', 9') being suitable for
- manoeuvring the central clamping plate (2) and the side clamping plates (3) to progressively and simultaneously reduce the cross-sections of the side passages and the central passage, from the open position of the clamps to an intermediate closed position wherein the central passage has a minimum cross-section and the side passages have cross-sections greater than the minimum cross-section of the central passage,
- subsequently manoeuvring the side clamping plates (3) in order to progressively reduce the cross-sections of the side passages, from the intermediate closed position to the closed position wherein the side passages have minimum cross-sections identical to the minimum cross-section of the central passage.

5. Device according to any claims 3 and 4, **characterised in that** each block (4) comprises at least one holding plate (40) arranged on the outside of each side clamping plate (3), and provided at the end with a holding edge (41) wherein a rear portion (41a) forms said holding surface (4a), the holding edges being transversally outwardly offset in relation to the clamping edges (31) of the side plates (3) in the open position of the clamps,
the holding plates form via the holding edge thereof respectively an outer passage wherein the cross-section decreases progressively when the clamps move to the closed position,
said actuating means (70, 9; 70', 9') being suitable for manoeuvring the holding plates (40) in order to progressively and simultaneously reduce the outer passages, from the open position to the intermediate closed position, wherein the outer passages have cross-sections greater than the minimum cross-sections of the side passages, and subsequently from the intermediate closed position to the closed position wherein the outer passages have cross-sections greater than the minimum cross-sections of the side passages.

6. Device according to claim 5, **characterised in that** the holding edge (41) of each holding plate (40) of a block (4) comprises a rear portion (41a), forming the holding surface (4a), extended by an upper portion (41b) and a lower portion (41c),
- each clamp comprises a block wherein each holding plate comprises a notched upper portion (41b) and a continuous lower portion (41c), and a block wherein each holding plate comprises a notched lower portion and a continuous upper portion,
- and for two opposing blocks, each holding plate of the block of a clamp has a notched upper portion and a continuous lower portion, and each holding plate of the block of the other clamp has a continuous upper portion and a notched lower portion.

7. Device according to any of claims 4 to 6, **characterised in that** each clamp (1, 1') comprises at least two central clamping plates (2, 2') and/or at least two side clamping plates (3, 3') on each side of the central clamping plate(s).

8. Device according to claim 7, **characterised in that** each clamp (1, 1') comprises at least four central clamping plates (2), and at least two side clamping plates (3) on each side of the central clamping plates.

9. Device according to any of claims 5 to 8, **characterised in that** each clamp (1, 1') comprises at least two holding plates (40) on each side of the central and side clamping plates.

10. Device according to claim 9, **characterised in that** each clamp (1, 1') comprises at least four holding plates (40) on each side of the central (2) and side clamping plates (3).

11. Device according to any of claims 4 to 10, **characterised in that** the central clamping plates (2, 2') and the side clamping plates (3, 3') of each clamp (1, 1') are mounted on a mounting support (70, 70'), said actuating means being suitable for moving the mounting supports according to a to-and-fro movement perpendicular to the strand feed direction (F), the central clamping plates (2) being slidably mounted on the mounting support thereof and moved by first elastic means (74) to an idle position, said central plates of a clamp being suitable for abutting against bearing edges (51') of intermediate plates (50, 50') of the other clamp in the intermediate closed position of the clamps and for moving in relation to the mounting support thereof to an intermediate retracted position when the clamps are moved from the intermediate closed position to the closed position.

12. Device according to any of claims 4 to 11, **characterised in that** it comprises cutting means comprising at least one blade (61) associated with the pair of clamps suitable for being manoeuvred by actuating means (62) between two adjacent central clamping plates in order to cut the strand.

13. Device according to any claims 11 and 12, **characterised in that** the blade (61) is pivotally mounted on the mounting support (70) of a first clamp (1), said actuating means being suitable for pivoting said blade between a retracted position and an active cutting position, the blade (61) is moved by elastic return means to the retracted position thereof, the actuating means being mounted on the second clamp (1') of the pair and comprising a tappet (62) mounted on the mounting support (70') of the second clamp, suitable for abutting the blade (61) in order to manoeuvre the blade towards the active position thereof against the elastic return means.

14. Device according to claim 13, **characterised in that** the side clamping plates (3, 3') are slidably mounted on the mounting support (70, 70') thereof and are moved by second elastic means (75) into an idle position, said side clamping plates of a clamp being suitable for abutting against bearing edges (51') of intermediate plates (50, 50') of the other clamp in the closed position of the clamps, the central clamping plates and the side clamping plates being suitable for moving in relation to the mounting support thereof to a retracted position when said clamps are moved from the closed position to a so-called cutting position by approaching the mounting support thereof, the tappet (62) moving the blade (61) from the retracted position thereof to the active position thereof when moving from the closed position to the cutting position.

15. Method for portioning a continuous strand formed from a food product covered with a casing using a device according to any claims 1 to 14, and comprising a clamping step wherein the strand is clamped to push out the food product and empty the casing along a segment of casing, **characterised in that** said clamping step comprises
- clamping the casing in order to empty the casing along a first central casing segment in a first position of the clamping means,
- subsequently clamping the casing on each side of said central segment to empty the casing along two side casing segments, arranged on each side of the central segment, in a second position after moving the clamping means in relation to the first position.

16. Method according to claim 15, **characterised in that** it comprises during the clamping step, holding the strand along outer casing segments adjacent to said side segments in order to guide the movement of the food product when the food product is pushed from the central segment and the side segments, and to retain a given cross-section of the strand along said side segments.

17. Method according to claim 15, **characterised in that** clamping of the casing along the two side segments starts before said central segment is emptied.

18. Method according to claims 15 to 17, **characterised in that** it comprises a cutting step comprising cutting of the casing at the central segment after clamping the casing along the side segments.
